# EUROPÄISCHE PATENTANMELDUNG

(11) **EP 0 897 936 A1**
(43) Veröffentlichungstag der Anmeldung: **24.02.1999**
(21) Anmeldenummer: 98114700.2
(22) Anmeldetag: 05.08.1998
(51) Int. Cl.: C08F 36/04, C08F 4/70, C08F 4/02, C08F 2/34

(54) **Neuer Cobalt-Träger-Katalysator, dessen Herstellung sowie seine Verwendung zur Polymerisation ungesättigter Verbindungen**

(30) Priorität: 18.08.1997 DE 19735794
(71) Anmelder: BAYER AG, 51368 Leverkusen (DE)
(72) Erfinder: Windisch, Heike, Dr., 51429 Bergisch Gladbach (DE); Sylvester, Gerd, Dr., 51375 Leverkusen (DE)

(57) **Zusammenfassung**

Die vorliegende Erfindung betrifft einen neuen Cobalt-Träger-Katalysator, bestehend aus
(a) Cobalt-Verbindungen
(b) Organoaluminium-Verbindungen
(c) Wasser oder OH-aciden Verbindungen
(d) anorganischen oder polymeren organischen Trägermaterialien und
(e) Modifikatoren ausgewählt aus der Gruppe der tertiären Phosphine,
dessen Herstellung sowie seine Verwendung zur Polymerisation ungesättigter Verbindungen, insbesondere von konjugierten Dienen, in der Gasphase.

Mit Hilfe der erfindungsgemäßen Katalysatoren gelingt die Polymerisation von konjugierten Dienen mit einem hohen Anteil von seitenständigen Doppelbindungen in den Polymeren in der Gasphase.

## Beschreibung

Die vorliegende Erfindung betrifft einen neuen Cobalt-Träger-Katalysator, dessen Herstellung sowie seine Verwendung zur Polymerisation ungesättigter Verbindungen, insbesondere von konjugierten Dienen, in der Gasphase.

Die Polymerisation von ungesättigten Verbindungen, z.B. konjugierten Dienen, in Lösung hat den Nachteil, daß bei der Abtrennung des nicht umgesetzten Monomeren und des Lösungsmittels vom gebildeten Polymeren niedermolekulare Verbindungen über Abluft und Abwasser in die Umwelt gelangen können und deshalb entsprechend entsorgt werden müssen. Außerdem müssen große Mengen an Lösungsmitteln eingesetzt und dann mit hohem Energieaufwand von den gebildeten Polymeren abgetrennt werden, was zu Lasten der Wirtschaftlichkeit des Polymerisationsverfahrens geht. Darüber hinaus sind die Lösungsmittel in der Regel brennbar und leicht entzündlich und stellen daher ein zusätzliches Gefahrenpotential bei der Polymerisation dar.

In den letzten Jahren hat sich bei der Herstellung, insbesondere von Polyethylen und Polypropylen, das Gasphasenverfahren als besonders vorteilhaft erwiesen und sich technisch immer mehr durchgesetzt. Die Vorteile des Gasphasenverfahrens beruhen insbesondere darauf, daß keine Lösungsmittel eingesetzt werden und Emissionen und Abwasserbelastungen verringert werden können.

Wegen der Vorteile des Gasphasenverfahrens wurden in den letzten Jahren Anstrengungen unternommen, um auch bei konjugierten Dienen Gasphasenpolymerisationsverfahren einzusetzen. So wurden beispielsweise neue Katalysatorsysteme für die Polymerisation von konjugierten Dienen, insbesondere Butadien, entwickelt, die sich als geeignet bei der Gasphasenpolymerisation erwiesen haben (siehe z.B. DE-A 43 34 045, EP 727 447, WO 96/31543, WO 96/31544, WO 96/04323, WO 96/04322 und WO 97/08211).

Die in den obengenannten Patentveröffentlichungen beschriebenen Katalysatoren bewirken bei der Polymerisation von konjugierten Dienen in der Gasphase einen hohen Gehalt an 1,4-cis-Doppelbindungen bei den Polymeren. Die bei der Gasphasenpolymerisation eingesetzten Cobalt-Katalysatoren - aber auch in untergeordneter Bedeutung die Nickel- und Titankatalysatoren - werden gemäß der Patentliteratur im Gegensatz zu den Seltenen Erdmetallen zusammen mit einem Lösungsmittel eingesetzt, wobei entweder der gesamte Katalysator oder nur der Cokatalysator gelöst in einem Lösungsmittel zugegeben wird. Dies hat zur Folge, daß es bei einer kontinuierlichen Fahrweise zu einer unerwünschten Anreicherung von Lösungsmittel im Kreisgas kommen kam. Das Lösungsmittel muß dann aus dem Kreisgas abgeführt werden, damit es sich nicht anreichert. Darüber hinaus liegen die Cobalt-Katalysatoren nicht in einem definierten Verhältnis im Katalysatorsystem vor, so daß die Zudosierung des Cokatalysators in den Reaktionsraum nicht zu einer optimalen Nutzung des Cokatalysators führt, was aus wirtschaftlicher Sicht unökonomisch ist. Außerdem muß das Lösungsmittel aus dem Polymeren entfernt werden, was zu einem erhöhten Aufwand im Verfahren führt.

Ziel der vorliegenden Erfindung ist es nun, neue, geträgerte Cobalt-Katalysatoren für die Gasphasenpolymerisation von konjugierten Dienen zur Verfügung zu stellen, die neben der cis-Polymerisation bei den konjugierten Dienen auch die Herstellung von Polymeren mit einem hohen und beliebig einstellbaren Gehalt an 1,2-Einheiten in der Gasphase ermöglichen und die ohne Zusatz von Lösungsmittel eingesetzt werden können.

Dieses Ziel wird durch den Einsatz von Katalysatoren auf Basis von geträgerten Cobalt-Verbindungen, die spezielle Modifikatoren enthalten, bei der Polymerisation von insbesondere konjugierten Dienen erreicht.

Gegenstand der vorliegenden Erfindung sind daher geträgerte Cobalt-Katalysatoren, bestehend aus
(a) Cobalt-Verbindungen,
(b) Organoaluminium-Verbindungen,
(c) Wasser oder OH-aciden Verbindungen,
(d) anorganischen oder polymeren organischen Trägermaterialien und
(e) Modifikatoren ausgewählt aus der Gruppe der tertiären Phosphine,
wobei das molare Verhältnis der Komponenten (a):(b):(e) im Bereich von 1 : 10 bis 1000 : 0,1 bis 100 liegt, das molare Verhältnis der Komponenten (b):(c) im Bereich von 1 : 0,1 bis 0,9 liegt und 0,01 bis 100 mmol der Komponente (a) pro 100 g der Komponente (d) eingesetzt werden.

Bevorzugt beträgt das molare Verhältnis der Komponenten (a):(b):(e) 1 : 10 bis 500 : 0,5 bis 50, das molare Verhältnis der Komponente (b):(c) 1 : 0,2 bis 0,8 und pro 100 g der Komponente (d) werden 0,1 bis 50 mmol der Komponente (a) eingesetzt.

Als Cobalt-Verbindungen (Komponente (a)) kommen insbesondere solche in Frage, die ausgewählt sind aus den Gruppen bestehend aus
I β-Diketonaten von Cobalt,
II β-Ketosäure-Komplexe von Cobalt,
III Cobaltsalzen von organischen Säuren mit 6 bis 15 Kohlenstoffatomen,
IV Komplexen von halogenierten Cobalt-Verbindungen der Formel CoXₐD_{b}, wobei X für ein Halogenatom steht, a die Zahlen 2 oder 3 bedeutet, D eine organische Verbindung, ausgewählt aus einer Gruppe bestehend aus tertiären Aminen, Alkoholen, tertiären Phosphinen, Ketonen und N,N-Dialkylamiden ist und b eine Zahl von 0 bis 6 bedeutet, sowie
V Organometall-Komplexen von Cobalt mit π-gebundenen Anionen.

Als Organoaluminium-Verbindungen der Komponente (b) kommen insbesondere Organoaluminium-Verbindungen der Formel X_{c}AlR_{d} in Frage, wobei X für ein Halogen steht, R für eine organische Alkylgruppe mit 1 bis 12 Kohlenstoffatomen steht, c und d die Zahlen 1 bis 2 bedeuten, wobei die Summe von c und d die Zahl 3 ist.

Als Cobalt-Verbindungen (Komponente (a)), die in inerten organischen Lösungsmitteln löslich sind, können z.B. eingesetzt werden:
(I) β-Diketonaten von Cobalt, mit β-Diketonaten der Formel R¹⁻CO-CR²⁻CO-R³, wobei R¹ bis R³ gleich oder verschieden sein können und für Wasserstoff oder eine Alkylgruppe mit 1 bis 10 C-Atomen stehen, z.B. Co(Me-CO-CH-CO-Me)₂ und Co(Me-CO-CH-CO-Me)₃;
(II) β-Ketosäureester-Komplexe von Cobalt, mit Ketosäureester der Formel R¹-CO-CR²-CO-O-R³, wobei R¹ bis R³ gleich oder verschieden sein können und für Wasserstoff oder eine Alkylgruppe mit 1 bis 10 C-Atomen stehen, z.B. Co(Me-CO-CH-CO-O-Me)₂, Co(Me-CO-CH-CO-O-Et), Co(Me-CO-CH-CO-O-Me)₃ und Co(Me-CO-CH-CO-O-Et)₃;
(III) Cobaltsalzen von organischen Säuren mit 6 bis 15 Kohlenstoffatome, z.B. Co(octanoat)₂, Co(versatat)₂;
(IV) Komplexen von halogenierten Cobalt-Verbindungen der Formel CoXₑD_{f,} wobei X für ein Halogenatom steht, e die Zahlen 2 oder 3 bedeutet, D eine organische Verbindung, ausgewählt aus einer Gruppe bestehend aus tertiären Aminen, Alkoholen, tertiären Phosphinen, Ketonen und N,N-Dialkylamiden, ist und f eine Zahl von 0 bis 6 bedeutet, z.B. CoCl₂-(Pyridin)₂, CoBr₂-(Pyridin)₂, CoCl₂-(PPh₃)₂, CoBr₂-(PPh₃)₂, CoCl₂-(Vinylimidazol)₄, CoCl₂-(EtOH);
(V) Organometall-Komplexen mit π-gebundenen Anionen, z.B. Tris-(π-allyl)-Cobalt, Bis-(π-allyl)-cobaltchlorid, Bis-(π-allyl)-cobaltbromid, Bis-(π-allyl)-cobaltiodid, Bisacrylnitril-(π-allyl)-Cobalt, (1,3-Butadien)[1-(2-methyl-3-butenyl)-π-allyl]-Cobalt, Bis-(π-1,5-cyclooctadienyl)-tert.butyl-isonitril)-Cobalt, (π-Cyclooctenyl)-(π-1,5-cyclooctadienyl)-Cobalt, (π-Cycloheptadienyl)-(π 1,5-cyclooctadienyl)-Cobalt, (Bicyclo[3,3,0]octadienyl)-(π-1,5-cyclooctadienyl)-Cobalt.

Als Organoaluminium-Verbindungen der Komponente (b) können insbesondere eingesetzt werden:

Diethylaluminiumchlorid, Ethylaluminiumsesquichlorid, Ethylaluminiumdibromid, Diethylaluminiumbromid, Ethylaluminiumdiiodid, Diethylaluminiumiodid, Di-iso-butylaluminiumchlorid, Octylaluminiumdichlorid, Dioctylaluminiumchlorid.

Als Komponente (c) eignen sich neben Wasser auch andere OH-acide Verbindungen, wie beispielsweise Alkohole und oxidische Trägermaterialien mit OH-Gruppen auf der Trägeroberfläche. Genannt werden beispielsweise Trägermaterialien auf Basis von Siliciumdioxid und Aluminiumoxid.

Als Trägermaterialien (Komponente (d)) werden teilchenförmige, anorganische Feststoffe oder teilchenförmige, polymere organische Feststoffe mit einer spezifischen Oberfläche >10, bevorzugt 10 bis 1000 m²/g (BET) und einem Porenvolumen von 0,3 bis 15, bevorzugt von 0,5 bis 12 ml/g eingesetzt, die sich während der Polymerisationsreaktion inert verhalten.

Die spezifische Oberfläche (BET) wird in üblicher Weise bestimmt [s. z.B. S. Brunauer, P.H. Emmet und Teller, J. Amer. Chem. Soc. 60 (2) (1938) 309], das Porenvolumen wird bestimmt durch die Zentrifugationsmethode [M. McDaniel, J. Colloid Interface Sci. 78 (1980) 31].

Als anorganische Feststoffe eignen sich insbesondere Silicagele, Tone, Alumosilikate, Talkum, Zeolithe, Ruß, Graphit, Aktivkohle, anorganische Oxide, wie z.B. Siliciumdioxid, Aluminiumoxid, Magnesiumoxid und Titandioxid, anorganische Salze, wie z.B. Aluminiumfluorid, sowie Siliciumcarbid, bevorzugt Silicagele, Zeolithe, Magnesiumchlorid und Ruß. Weiterhin sind organische Trägermaterialien geeignet, wie z.B. Polyethylen, Polypropylen, Polystyrol oder Polybutadien.

Die genannten anorganischen Feststoffe, die der obengenannten Spezifikation genügen und deshalb für den Einsatz geeignet sind, werden beispielsweise naher beschrieben in Ullmanns, Enzyklopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).

Die anorganischen und organischen polymeren Feststoffe können einzeln oder im Gemisch untereinander eingesetzt werden. Auf 100 g des Trägermaterials werden - wie bereits erwähnt - 0,01 bis 100 mmol der Komponente (a), bevorzugt 0,1 bis 50 mmol der Komponente (a) eingesetzt.

Weiterhin ist es natürlich auch möglich, den Katalysator auf nicht poröse, teilchenförmige Feststoffe, wie Glasperlen oder Glasringe, oder auf der Oberfläche der Reaktionsgefäße, wie z.B. Glasflaschen oder Glaskolben, zu heterogenisieren.

Als Modifikatoren (Komponente (e)) kommen insbesondere solche tertiäre Phosphine der Formel P(3-R¹-,4-R²-,5-R³-C₆H₂)₃ in Frage, worin R¹ bis R³ gleich oder verschieden sind und für Wasserstoff oder eine Alkylgruppe mit 1 bis 6 C-Atomen stehen, z.B. P(C₆H₅)₃, P(4-Me-C₆H₄)₃, P(3,5-Me₂-C₆H₃)₃. Die Zahlen 3, 4 und 5 in der allgemeinen Formel für die Phosphine bezeichnen die Substitutionsposition des aromatischen Restes.

In diesem Zusammenhang sei darauf hingewiesen, daß die Cobaltverbindungen der Komponente (a) und die Organoaluminium-Verbindungen der Komponente (b) sowohl einzeln als auch im Gemisch untereinander eingesetzt werden können. Das günstigste Mischungsverhältnis kann dabei durch entsprechende Vorversuche leicht bestimmt werden.

Ein weiterer Gegenstand der vorliegenden Erfindung ist ein Verfahren zur Herstellung der geträgerten Cobalt-Katalysatoren, bestehend aus
(a) Cobalt-Verbindungen,
(b) Organoaluminium-Verbindungen,
(c) Wasser oder OH-aciden Verbindungen,
(d) anorganischen oder polymeren organischen Trägermaterialien,
(e) Modifikatoren, ausgewählt aus der Gruppe der tertiären Phosphine,
das dadurch gekennzeichnet ist, daß man die Komponenten (a) bis (e) in einem inerten Lösungs- und/oder Verdünnungsmittel bei Temperaturen von -80 bis 100°C in einem molaren Verhältnis der Komponenten (a) : (b) : (e) im Bereich von 1 : 10 bis 1000 : 0,1 bis 100, einem molaren Verhältnis der Komponenten (b) : (c) im Bereich von 1 : 0,1 bis 0,9 und einem Verhältnis von 0,01 bis 100 mmol der Komponente (a) pro 100 g der Komponente (d) miteinander umsetzt und anschließend das inerte Lösungs- und/oder Verdünnungsmittel bei Temperaturen von -40 bis 100°C, gegebenenfalls unter vermindertem Druck, entfernt.

Die Umsetzung der Komponenten (a) bis (e) erfolgt insbesondere in dem zuvor beschriebenen bevorzugten Mengenverhältnis.

Nach dem erfindungsgemäßen Verfahren können die einzelnen Komponenten in beliebiger Reihenfolge zusammengegeben werden.

Bevorzugt werden die Komponenten bei Temperaturen von -50 bis 80°C, insbesondere bei -40 bis 60°C, abgemischt. Der Temperaturbereich liegt dabei zwischen Schmelz- und Siedepunkt der eingesetzten inerten Lösungs- und/oder Verdünnungsmittel.

Als inerte Lösungs- und/oder Verdünnungsmittel kommen insbesondere aliphatische und/oder aromatische Lösungsmittel in Frage, wie Butan, Pentan, n-Hexan, Cyclohexan, Benzol, Toluol, Xylol.

Die inerten Lösungs- und/oder Verdünnungsmittel werden üblicherweise in Mengen von 1 - 1000 g, bezogen auf 100 g Trägermaterial eingesetzt. Aus ökonomischen Gründen wird die eingesetzte Menge an Lösungs- und/oder Verdünnungsmittel möglichst gering gehalten.

Die Herstellung der erfindungsgemäßen Katalysatoren kann nach verschiedenen Varianten erfolgen:

Man kann z.B. das Trägermaterial in dem inerten Lösungs- und/oder Verdünnungsmittel aufschlämmen und anschließend die Komponenten (a), (b), (c) und (e) in beliebiger Reihenfolge zugeben. Es ist auch möglich, eine Lösung aus der Katalysatorkomponenten (a), (b), (c) und (e) durch Zugabe der Komponenten in beliebiger Reihenfolge in einem inerten Lösungsmittel herzustellen und diese Lösung zu dem Trägermaterial, das entweder in einem inerten Lösungs- und/oder Verdünnungsmittel aufgeschlämmt ist oder trocken vorliegt, zu geben.

Die Herstellung des Katalysators kann auch in Gegenwart eines Diens erfolgen, wobei das Dien gleich oder verschieden von dem Dien sein kann, das später mit diesem Katalysator in der Gasphasenpolymerisation polymerisiert wird.

Als eine besonders geeignete Ausführungsform hat sich folgende Reihenfolge für die Zugabe der Komponente ergeben:

Das Trägermaterial wird im Lösungs- und/oder Verdünnungsmittel suspendiert und die Zugabe der Komponenten erfolgt in der Reihenfolge (b) - (c) - (a) - (e), wobei die Komponenten entweder in einem geeigneten Lösungsmittel gelöst oder ohne zusätzliches Lösungsmittel zugegeben werden.

Eine weitere geeignete Ausführungsform erfolgt gemäß folgender Zugabe der Komponenten:

Das Trägermaterial wird im Lösungs- und/oder Verdünnungsmittel suspendiert und die Zugabe der Komponenten erfolgt in der Reihefolge (a) - (c) - (b) - (e), wobei die Komponenten entweder in einem geeigneten Lösungsmittel gelöst oder ohne zusätzliches Lösungsmittel zugegeben werden.

Wie erwähnt, können die eingesetzten Lösungs- und/oder Verdünnungsmittel einzeln oder im Gemisch untereinander eingesetzt werden, und zwar für alle Komponenten des erfindungsgemäßen Katalysators. Nach Ende der Reaktion wird das Lösungs- und/oder Verdünnungsmittel destillativ entfernt, gegebenenfalls im Vakuum, wobei der Träger der Katalysator als frei fließender Feststoff erhalten wird.

Ein weiterer Gegenstand der vorliegenden Erfindung ist die Verwendung der erfindungsgemäßen geträgerten Cobalt-Katalysatoren für die Polymerisation von ungesättigten Verbindungen, insbesondere für die Polymerisation von konjugierten Dienen, vorzugsweise von 1,3-Butadien, Isopren, Pentadien und/oder Dimethylbutadien, in der Gasphase. Es ist auch möglich, den erfindungsgemäßen Katalysator für die Polymerisation in Lösung oder nach dem Slurry-Verfahren einzusetzen.

Die Polymerisation erfolgt nach dem Gasphasenverfahren z.B. so, daß man die ungesättigte Verbindung mit dem erfindungsgemäßen Katalysator in Berührung bringt. Dabei können dem gasförmig vorliegenden Monomeren weitere Gase zugemischt werden, die entweder der Verdünnung oder der Wärmeabführung oder der Regelung des Molekulargewichts oder der Mikrostruktur dienen.

Die Polymerisation kann bei Drücken von 1 mbar bis 50 bar, bevorzugt 1 bis 20 bar, durchgeführt werden. Im allgemeinen wird die Polymerisation bei Temperaturen von -40 bis 150°C, bevorzugt bei -20 bis 100°C, besonders bevorzugt bei 0 bis 80°C, durchgeführt.

Die Gasphasenpolymerisation kann in jeder für eine Gasphasenpolymerisation geeigneten Apparatur durchgeführt werden.

So kann z.B. ein Rührreaktor, ein Drehreaktor oder ein Fließbettreaktor oder eine Kombination dieser Reaktortypen verwendet werden. Die Gasphasenpolymerisation kann auch unter Zusatz geeigneter inerter Pudermittel, wie Silicagel oder Ruß, durchgeführt werden.

Der erfindungsgemäße Katalysator wird bei der Gasphasenpolymerisation in eine Apparatur überführt, die geeignet ist, den pulverförmigen Katalysator in Bewegung zu halten. Das kann z.B. durch Rühren, Drehen und/oder durch einen Gasstrom erfolgen. Das zunächst im Gasraum befindliche inerte Gas, z.B. Argon, wird dann durch das gasförmige Monomere ersetzt. Dabei setzt eine sofortige Polymerisation ein und die Temperatur steigt an. Das Monomere wird, gegebenenfalls verdünnt mit einem Inertgas, so schnell dem Reaktor zugeführt, daß die gewünschte Reaktionstemperatur nicht überschritten wird. Die Reaktionstemperatur kann auch auf übliche Weise durch Heizen oder Kühlen eingestellt werden. Die Wärmeabführung kann auch durch Zuführen von flüssigen Stoffen, die bei Reaktionstemperatur verdampfen, erfolgen. Die Polymerisation wird durch Abstellen der Monomerzufuhr beendet. Das Polymere kann in der bekannten Weise so weiterbehandelt werden, daß man den Katalysator desaktiviert und das Polymere mit z.B. bekannten Alterungsschutzmitteln, wie sterisch gehinderten Phenolen oder aromatischen Aminen, in üblichen Mengen behandelt.

Die Vorteile, die bei der Polymerisation von insbesondere konjugierten Dienen in der Gasphase mit Hilfe des erfindungsgemäßen Cobalt-Katalysators erzielt werden, sind insbesondere darin zu sehen, daß es mit Hilfe des erfindungsgemäßen Cobalt-Katalysators gelingt, Polymere mit hohem Anteil an seitenständiger Doppelbindungen, beispielsweise Polybutadien mit einem hohen Anteil an 1,2-Doppelbindungen herzustellen, wobei der Anteil an 1,2-Polybutadien durch entsprechende Variation des Katalysators leicht zu steuern ist. Weiterhin ist überraschend, daß es mit dem erfindungsgemäßen Katalysator gelingt, ohne Lösungsmittel zu arbeiten. Das Arbeiten mit Lösungsmitteln war nämlich bei den bisherigen Cobalt-Katalysatoren stets erforderlich.

### Beispiele

Die Darstellung der geträgerten Katalysatoren und die Durchführung der Gasphasenpolymerisationen erfolgten bei den beschriebenen Beispielen in einer Atmosphäre von gereinigtem Argon. Die Bestimmung der Mikrostruktur der Polybutadiene erfolgte mittels IR-Spektroskopie [E.O. Schmalz, W. Kimmer, Z. anal. Chem., 181 (1961) 229].

### Beispiel 1

In einem 1-l Glaskolben wurden bei -40 °C zu einer Lösung von 45 µl Wasser (= 2,5 mmol) in 5 ml Toluol unter Argon 4,35 ml einer 1,15 molaren Lösung von DEAC (= 5 mmol Diethylaluminiumchlorid) in n-Hexan gegeben, die Lösung innerhalb von 30 min unter Rühren mit einem Magnetrührer auf 20 °C erwärmt und dann 0,25 ml einer 0,2 molaren Lösung von Co(oct)₂ (= 0,05 mmol Cobalt-II-octanoat) in Toluol und 262 mg PPh₃ (1 mmol) zugegeben. Das Lösungsmittel wurde anschließend bei Raumtemperatur im Vakuum vollständig abdestilliert und der gebildete Katalysator durch Schwenken des Kolbens gleichmäßig über die gesamte Glaswand verteilt.

Die Gasphasenpolymerisation erfolgte, indem der Kolben vollständig evakuiert und anschließend mit gasförmigen Butadien gefüllt wurde. Die Reaktionstemperatur wurde durch ein auf 40 °C thermostatiertes Wasserbad gehalten. Der Butadiendruck wurde während der Polymerisation zwischen 650 und 1050 mbar gehalten. Der Verlauf der Polymerisation wurde anhand des Druckverlaufes über die Zeit bestimmt. Nach 60 min wurden 8,9 g Polybutadien erhalten. 93 % des Polybutadiens konnten in THF gelöst werden, die Bestimmung der Mikrostruktur ergab einen Gehalt von 80 % 1,2-, 18 % 1,4-cis- und 2 % 1,4-trans-Polybutadien.

### Beispiel 2-9

Die Darstellung des Katalysatoren und die Durchführung der Gasphasenpolymerisation erfolgten gemäß Beispiel 1. Die verwendeten Ansatzgrößen für die Katalysatorherstellung, Polymerisationsbedingungen und Ergebnisse der Gasphasenpolymerisation sind in Tabelle 1 zusammengefaßt.

**Tabelle 1**

| Nr. | Co(oct)₂ in mmol | DEAC in mmol | H₂O in mmol | PPh₃ in mmol | COD in mmol | T in °C | t in min | PB in g | 1,2 in % | cis in % | trans in % |
|---|---|---|---|---|---|---|---|---|---|---|---|
| 2 | 0,05 | 5,0 | 2,5 | 0,51 | - | 0 | 100 | 18,5 | 87 | 11 | 2 |
| 3 | 0,05 | 5,0 | 2,5 | 0,5 | 0,5 | 25 | 68 | 8,1 | 81 | 16 | 3 |
| 4 | 0,05 | 5,0 | 2,5 | 0,5 | 0,25 | 25 | 69 | 10,1 | 82 | 15 | 3 |
| 5 | 0,05 | 5,0 | 2,5 | 0,25 | 0,5 | 25 | 64 | 17,7 | 69 | 27 | 4 |
| 6 | 0,42 | 5,0 | 1,0 | 0,42 | - | 25 | 60 | 13,6 | 14 | 73 | 13 |
| 7 | 0,42 | 5,0 | 1,0 | - | - | 25 | 70 | 39,0 | 5 | 76 | 19 |
| 8 | 0,05 | 5,0 | 2,5 | - | - | 40 | 60 | 16,0 | 5 | 84 | 11 |
| 9 | 0,05 | 5,0 | 2,5 | - | - | 40 | 85 | 31,1 | nb | nb | nb |

### Beispiel 10

In einem 250-ml Glaskolben wurden bei 20 °C 1,9 g eines mikroporösen Polypropylenträgers (Accurel EP100, Firma Akzo Nobel) in 24 ml Toluol mit 0,4 mmol Wasser suspendiert. Unter Rühren wurden nacheinander 0,095 ml einer 1,78 molaren Lösung von Co(oct)₂ in Hexan (0,17 mmol), 1,74 ml einer 1,15 molaren Lösung von DEAC in Hexan (2,0 mmol) und 10,5 mg PPh₃ (0,04 mmol) gegeben. Nach 2 h wurde das Lösungsmittel im Vakuum abdestilliert und der geträgerte Katalysator als frei fließender Feststoff erhalten.

Die Gasphasenpolymerisation erfolgte, indem der geträgerte Katalysator in einen 1-l-Glaskolben überführt wurde. Der Kolben wurde vollständig evakuiert und anschließend mit gasförmigen Butadien gefüllt wurde. Die Reaktionstemperatur wurde durch ein auf 50 °C thermostatiertes Wasserbad gehalten. Der Butadiendruck wurde während der Polymerisation zwischen 650 und 1050 mbar gehalten. Der Verlauf der Polymerisation wurde anhand des Druckverlaufes über die Zeit bestimmt. Nach 30 min wurde 1,0 g Polybutadien mit einen Gehalt von 43 % 1,2-, 41 % 1,4-cis- und 16 % 1,4-trans-Polybutadien erhalten.

### Beispiel 11-15

Die Darstellung des Katalysatoren und die Durchführung der Gasphasenpolymerisation erfolgten gemäß Beispiel 10, die Katalysatoren wurden ohne Zusatz von eines Modifikators hergestellt. Die verwendeten Ansatzgrößen und Reaktionsbedingungen für die Katalysatorherstellung, Polymerisationsbedingungen und Ergebnisse der Gasphasenpolymerisation sind in Tabelle 2 zusammengefaßt.

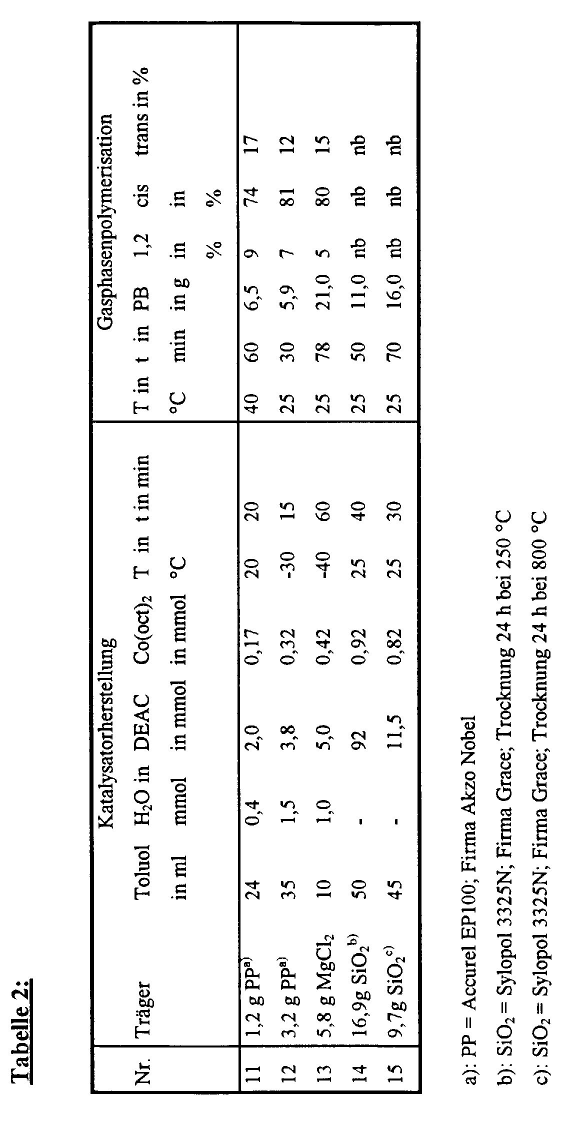

## Patentansprüche

1. Geträgerte Cobalt-Katalysatoren bestehend aus
(a) Cobalt-Verbindungen
(b) Organoaluminium-Verbindungen
(c) Wasser oder OH-aciden Verbindungen
(d) anorganischen oder polymeren organischen Trägermaterialien
(e) Modifikatoren ausgewählt aus der Gruppe der tertiären Phosphine,
wobei das molare Verhältnis der Komponenten (a):(b):(e) im Bereich von 1:10 bis 1000:0,1 bis 100 liegt, das molare Verhältnis der Komponenten (b):(c) im Bereich von 1:0,1 bis 0,9 liegt und 0,01 bis 100 mmol der Komponente (a) pro 100 g der Komponente (d) eingesetzt werden.

2. Verfahren zur Herstellung der geträgerten Cobalt-Katalysatoren bestehend aus
(a) Cobalt-Verbindungen
(b) Organoaluminium-Verbindungen
(c) Wasser oder OH-aciden Verbindungen
(d) anorganischen oder polymeren organischen Trägermaterialien
(e) Modifikatoren ausgewählt aus der Gruppe der tertiären Phosphine,
dadurch gekennzeichnet, daß man die Komponenten (a) bis (e) in einem inerten Lösungs- und/oder Verdünnungsmittel bei Temperaturen von -80 bis 100°C mit einem molaren Verhältnis der Komponenten (a) : (b) : (e) im Bereich von 1 : 10 bis 1000 : 0,1 bis 100, einem molaren Verhältnis der Komponenten (b) : (c) im Bereich von 1 : 0,1 bis 0,9 und einem Verhältnis von 0,01 bis 100 mmol der Komponente (a) pro 100 g der Komponente (d) miteinander umsetzt und dann das inerte Lösungs- und/oder Verdünnungsmittel bei Temperaturen von -40 bis 100°C, gegebenenfalls unter vermindertem Druck, entfernt.

3. Verwendung des Katalysators nach Anspuch 1 zur Polymerisation von konjugierten Dienen, insbesondere in der Gasphase.
